# FASCICULE DE BREVET EUROPEEN

(11) **EP 0 389 727 B1**
(45) Date de publication et mention de la délivrance du brevet: **01.09.1993**
(21) Numéro de dépôt: 89403674.8
(22) Date de dépôt: 28.12.1989
(51) Int. Cl.: G01B 11/16

(54) **Installation de mesure des déformations d'un objet soumis à des contraintes**
Vorrichtung zur Messung der Deformation eines unter Spannung stehenden Objekts
Arrangement for measuring the deformation of an object put under stress

(30) Priorité: 30.12.1988 FR 8817516
(43) Date de publication de la demande: 03.10.1990
(73) Titulaire: AEROSPATIALE Société Nationale Industrielle, 75781 Paris Cédex 16 (FR)
(72) Inventeur: Le Bail, Michel, F-78000 Versailles (FR); Vailland de Guelis, Hubert, F-78410 Aubergenville (FR)
(74) Mandataire: Mongrédien, André

(56) Documents cités:
- DE-A- 2 636 429
- FR-A- 816 087
- US-A- 3 383 980
- PATENT ABSTRACTS OF JAPAN, vol. 10, no. 30 (P-426)[2087], 5 février 1986, page 134 P 426; & JP-A-60 181 604 (TOYODA GOSEI K.K.) 17-09-1985j
- STRENGTH OF MATERIALS, vol. 7, no. 9, septembre 1975 (publ. juin 1976), pages 1147-1148, Plenum Publishing Corp., New York, US; I.I. OSTAPCHUK: "A device for measuring the rim displacement of turbine rotors"
- PATENT ABSTRACTS OF JAPAN, vol. 7, no. 150 (P-207)[1295], 30 juin 1983, page 146 P 207; & JP-A-58 62 504 (OPUTO KIGIYOU K.K.) 14-04-1983
- PATENT ABSTRACTS OF JAPAN, vol. 11, no. 126 (P-569)[2573], 21 avril 1987, page 13 P 569; & JP-A-61 269 005 (SCIENCE & TECH. AGENCY) 28-11-1986

## Description

L'invention concerne une installation permettant de mesurer à distance les déformations d'un objet soumis à des contraintes, tel qu'un volant d'inertie tournant à grande vitesse dans une enceinte sous vide.

Une telle installation est destinée à être utilisée pour étudier le comportement de pièces soumises à des contraintes, que ces pièces soient des pièces tournantes ou des pièces non tournantes soumises par exemple à des vibrations ou des déplacements alternés, dont on désire connaître les amplitudes maximum.

En particulier, l'installation selon l'invention peut être utilisée pour étudier le comportement des rotors des systèmes de stockage cinétique d'énergie qui sont utilisés sur les engins spatiaux tels que les satellites artificiels, pour fournir aux appareils embarqués sur ces derniers l'énergie nécessaire à leur fonctionnement, lorsque les satellites se trouvent dans une zone d'ombre. Ces systèmes de stokage cinétique d'énergie ont été développés dans le but de remplacer les batteries électriques qui constituaient la source principale de panne des satellites et représentaient une masse embarquée importante.

Le rotor ou volant d'inertie d'un tel système de stockage cinétique d'énergie est constitué de plusieurs éléments fonctionnels dont l'élément utile est une jante animée d'une grande vitesse de rotation (environ 30000 tours/mn pour un diamètre de 600 mm), afin d'obtenir une énergie cinétique élevée par unité de masse. Cette jante est reliée par des bras à un moyeu central supporté par suspension magnétique. En outre, des moyens d'équilibrage statique et dynamique sont prévus.

Compte tenu de la vitesse de rotation très élevée du rotor dans le vide, les contraintes centrifuges exercées sur le rotor sont importantes. La connaissance du comportement des rotors soumis à de telles contraintes constitue un élément important dans la conception de ces rotors. En particulier, il est souhaitable de pouvoir mesurer avec une grande précision les déformations telles que l'élongation et le gonflement des rotors tournant à grande vitesse.

Pour effectuer de tel les mesures, il existe actuellement plusieurs installations permettant de reconstituer au sol les conditions de fonctionnement du rotor dans l'espace, en plaçant ce rotor dans une enceinte sous vide et en le faisant tourner à grande vitesse à l'intérieur de cette enceinte.

Parmi ces installations, certaines mettent en oeuvre des capteurs de déplacement à courants de Foucault. Cependant, ces capteurs sont inutilisables lorsque le rotor ne comporte pas de surface conductrice ou lorsque l'environnement du rotor est un milieu conducteur. De plus, la forme, les dimensions et la nature des matériaux constituant le rotor affectent l'impédance de la bobine du capteur et, par conséquent, la qualité de la mesure. En outre, étant donné que la mesure effectuée est une moyenne des élongations respectives du rotor, elle présente un manque de précision notable.

Par ailleurs, l'utilisation de capteurs de déplacement à courants de Foucault conduit également à des erreurs de mesure en raison des dérives thermiques qui sont compensées sur le capteur mais non sur le rotor. Ainsi, la perméabilité magnétique du rotor varie avec la température, de même que sa résistivité, dans le cas où l'épaisseur du rotor est inférieure à la profondeur de pénétration des courants de Foucault. Des erreurs de mesure sont également introduites lorsque les rayons de courbure des rotors sont trop importants par rapport à la taille du capteur ou lorsque les surfaces des rotors sont inférieures à celles du capteur. Toutes ces causes d'erreurs rendent nécessaire un étalonnage du capteur en fonction de la température du rotor. L'appareil doit, par conséquent, être étalonné pour chaque forme de rotor et chaque type de matériau. Cet étalonnage nécessite plusieurs paramètres de réglage, de sorte que la mise en oeuvre de ces capteurs est particulièrement délicate.

Parmi les autres installations de mesure connues, on citera notamment des installations optiques fonctionnant sur la base d'une mesure de contraste noir/blanc. Comme les installations utilisant des capteurs à courants de Foucault, la mesure est une moyenne, ce qui conduit à un manque de précision notable. De plus, ces installations présentent des difficultés d'utilisation et des problèmes d'étalonnage et d'éclairage. En outre, leur coût de mise en oeuvre est relativement élevé.

D'autres installations connues ne permettent pas d'effectuer une mesure de déformation mais seulement de visualiser ces déformations au moyen par exemple d'un système vidéo. Cependant, ces installations présentent l'inconvénient d'être limitées par le nombre d'images émises durant le défilement. En outre, aucune mesure n'est effectuée et aucune donnée n'est enregistrée.

Dans le document Patent Abstract of Japan, vol. 10, n° 30 (p-426) 2087, 5 février 1986, page 134 l. 426 et JP-A-60 181604, il est proposé de mesurer les déformations d'un objet tournant placé dans une chambre thermostatique, en l'éclairant à l'aide d'un stroboscope et en l'observant à l'aide d'une caméra vidéo. Ces deux appareils sont synchronisés sur la vitesse de rotation de l'objet, de telle sorte que la déformation est mesurée automatiquement par un système vidéo.

Par ailleurs, le document US-A-3 383 980 enseigne de mesurer les déformations d'une poutre en porte-à-faux entraînée en rotation, en repérant la fibre neutre de la poutre par un point brillant placé au centre de sa face d'extrémité, et en photographiant les déplacements de ce point par rapport à un réticule disposé à proximité de la face d'extrémité, au moyen d'un appareil photographique placé dans le prolongement de la fibre neutre.

Pour effectuer des mesures de la déformation d'un rotor tournant à grande vitesse dans une enceinte sous vide, on peut envisager d'utiliser d'autres méthodes telles que l'interférométrie utilisant la différence de marche entre deux trajets optiques ou la télémétrie à laser. Cependant, ces méthodes présentent elles aussi des difficultés de mise en oeuvre et d'application car, d'une manière générale, elles sont délicates à manipuler.

L'invention a précisément pour objet une installation permettant de mesurer la déformation d'un objet soumis à des contraintes, tel qu'un rotor tournant à grande vitesse dans une enceinte sous vide, avec une bonne précision et en tout point, cette installation étant facile à mettre en oeuvre et permettant à volonté une visualisation directe des mesures et/ou leur enregistrement.

Selon l'invention ce résultat est obtenu au moyen d'une installation pour mesurer la déformation d'un objet soumis à des contraintes, comprenant:
- un premier objectif formant une image réelle de l'objet, à l'échelle 1 ;
- un réticule gradué placé à l'emplacement de ladite image réelle ;
- un deuxième objectif placé au-delà de l'image réelle par rapport au premier objectif, et formant des images grossies de l'image réelle et du réticule ; et
- des moyens d'observation desdites images grossies permettant, par comparaison des images grossies du réticule et de l'image réelle, de mesurer des déformations de cette dernière et, par conséquent, de l'objet.

Dans le cas particulier d'un objet tournant à grande vitesse, une telle installation comprend de plus :
- une enceinte sous vide apte à recevoir ledit objet ;
- un stroboscope délivrant des impulsions lumineuses dirigées sur l'objet ;
- des moyens pour synchroniser la fréquence desdites impulsions lumineuses sur la vitesse de l'objet ;
le premier objectif étant placé hors de l'enceinte, devant un hublot de cette dernière, de façon à former l'image réelle de l'objet à l'extérieur de l'enceinte.

Avantageusement, pour permettre d'observer différentes zones de l'objet, l'installation comprend de plus un moyen de déphasage des impulsions lumineuses délivrées par le stroboscope.

Bien que tous moyens d'observation tels qu'un écran, un appareil photographique ou autres puissent être utilisés, ces moyens d'observation comprennent avantageusement une caméra vidéo connectée à un enregistreur vidéo relié à un écran vidéo.

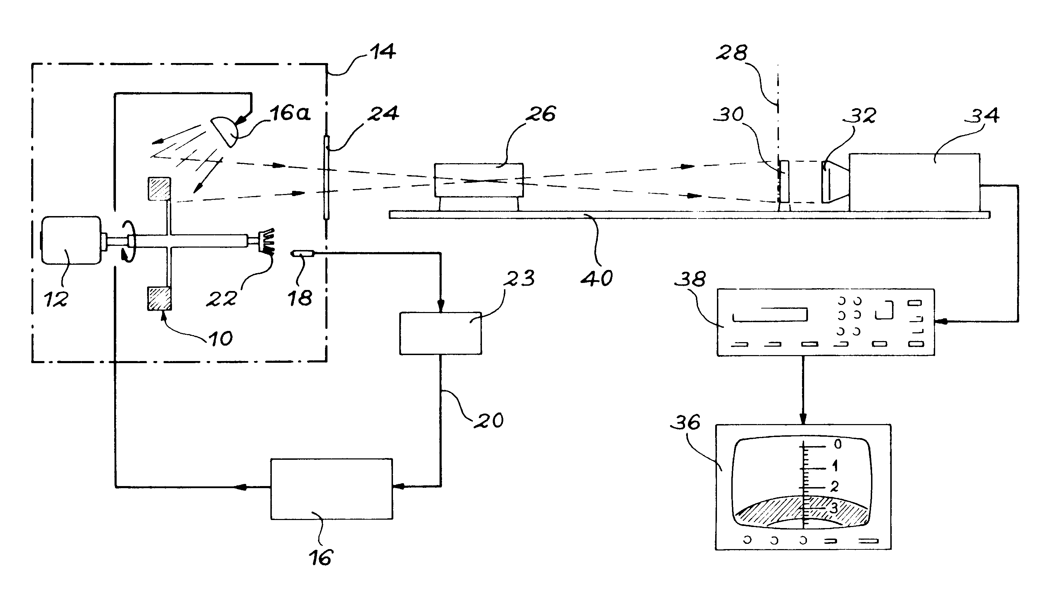

Un mode de réalisation préféré de l'invention va à présent être décrit, à titre d'exemple non limitatif, en se référant au dessin annexé dans lequel la figure unique représente de façon schématique une installation selon l'invention, appliquée à la mesure des déformations d'un rotor tournant à grande vitesse.

Sur la figure, la référence 10 désigne un rotor ou volant d'inertie destiné à être utilisé comme système de stockage cinétique d'énergie sur un satellite artificiel. Afin de permettre de mesurer et de visualiser l'élongation et le gonflement de ce rotor 10 avant son montage sur le satellite, ce rotor est placé sur une installation de mesure au sol réalisée conformément à l'invention, et conçue pour reconstituer au sol les conditions de fonctionnement du rotor dans l'espace.

A cet effet, le rotor 10 ainsi qu'une turbine à air comprimé 12 permettant d'entraîner le rotor 10 en rotation à grande vitesse sont placés à l'intérieur d'une enceinte étanche 14 dans laquelle un vide poussé est créé à l'aide d'un circuit de vide (non représenté). Dans ces conditions, la vitesse de rotation du rotor 10 peut atteindre pratiquement sans échauffement des valeurs d'environ 30000 tours/mn pour un diamètre de 600 mm. Ces valeurs sont comparables à celles qui sont atteintes dans l'espace, de sorte que les mesures effectuées sont représentatives du fonctionnement du rotor sur le satellite.

L'installation de mesure selon l'invention comprend tout d'abord un stroboscope 16, placé hors de l'enceinte 14. Le stroboscope 16 permet d'arrêter artificiellement, par effet stroboscopique, l'image d'une zone déterminée de la jante constituant la partie périphérique du rotor 10, en délivrant périodiquement des impulsions lumineuses dirigées sur cette partie, à l'aide d'une lampe 16a placée à l'intérieur de l'enceinte 14.

Afin que les impulsions lumineuses émises par le stroboscope soient synchronisées sur la vitesse de rotation du rotor 10 à tout moment, le fonctionnement du stroboscope 16 est commandé à partir d'un capteur 18 relié au stroboscope par un conducteur 20 et placé en face de fentes de codage 22 solidaires du moyeu du rotor 10. Il est ainsi possible d'observer avec précision le comportement du rotor pendant la phase d'accélération. La synchronisation peut notamment être faite de telle sorte que le stroboscope 16 délivre 60 impulsions lumineuses par tour du rotor 10.

Afin de permettre une observation de différentes zones du rotor, un système asservi 23 constitué par un déphaseur est placé sur le conducteur 20 entre le capteur 18 et le stroboscope 16. Ce système permet un contrôle fin du décalage angulaire des impulsions lumineuses délivrées par le stroboscope.

Les images arrêtées du rotor 10 ainsi formées à l'aide du stroboscope 16 doivent ensuite être sorties de l'enceinte sous vide 14, afin que les mesures et les observations puissent être faites à l'extérieur de cette enceinte.

A cet effet, l'enceinte 14 comporte un hublot 24 en face de la zone du rotor 10 soumise aux impulsions lumineuses délivrées par la lampe 16a du stroboscope. Derrière ce hublot 24 est placé un objectif 26 à grande focale qui a pour fonction de former, à l'extérieur de l'enceinte 14, une image réelle à échelle 1 de chacune des images arrêtées du rotor obtenues à l'aide du stroboscope. La focale de l'objectif 26 est déterminée en fonction de la distance qui sépare le rotor 10 du hublot 24, sachant que cet objectif 26 est placé juste derrière ce dernier. Etant donné que dans la pratique, cette distance est généralement voisine de 1 m, la focale de l'objectif 26 est comprise entre environ 300 mm et environ 400 mm. Sur la figure, le plan dans lequel se forme l'image réelle, à l'échelle 1, de chacune des images arrêtées du rotor obtenues à l'aide du stroboscope 16 est désigné par la référence 28.

Afin que l'image réelle qui se forme à l'échelle 1 dans le plan 28 puisse ensuite servir de base à une mesure précise, on place également dans le plan 28 un réticule gradué 30 qui se superpose à l'image réelle.

Les images superposées du rotor et du réticule situées dans le plan 28 sont ensuite reprises par un objectif 32 à courte focale, qui a pour fonction d'assurer le grossissement de ces images avant leur utilisation. Un objectif 32 de focale comprise entre environ 25 mm et environ 38 mm peut notamment être utilisé.

Dans le mode de réalisation représenté, une caméra vidéo 34 est placée derrière l'objectif 32, la distance entre la surface sensible de la caméra 34 et l'objectif 32 étant suffisamment grande pour obtenir un grossissement compris entre environ 100 fois et environ 300 fois.

Pour permettre la visualisation directe de l'image agrandie de la partie du rotor située sur le chemin optique de l'installation, à laquelle se superpose l'image agrandie dans les mêmes proportions du réticule 30, la caméra vidéo 34 est raccordée à un écran vidéo 36. Une visualisation et une mesure en temps réel des phénomènes de déformations du rotor sous l'effet de sa rotation à grande vitesse sont ainsi réalisées.

De plus, un enregistreur vidéo 38 est avantageusement interposé entre la caméra 34 et l'écran 36, pour permettre un stockage de l'image en vue d'une exploitation ultérieure.

Le réticule 30 peut notamment être gradué en dizièmes de millimètres, un dizième de millimètre pouvant être représenté par 30 mm sur l'écran 36. Des mesures précises des déformations du rotor telles que son élongation et son gonf lement sous l'effet des contraintes centrifuges qu'il subit peuvent ainsi être effectuées soit de façon directe sur l'écran vidéo 36, soit ultérieurement sur l'enregistreur 38, soit en ayant recours à chacune de ces techniques.

La description qui précède montre que l'installation de mesure selon l'invention est particulièrement simple et que sa mise en oeuvre ne présente pas de difficulté notable. De plus, la disposition de tous les appareils de l'installation, depuis le stroboscope 16 jusqu'à l'enregistreur 38, à l'extérieur de l'enceinte sous vide 14 permet d'utiliser une enceinte de petites dimensions dans laquelle un vide de bonne qualité peut être rapidement obtenu, tout en facilitant l'utilisation des appareils.

Comme l'illustre la figure, les deux objectifs 26 et 32, ainsi que le réticule 30 et la caméra vidéo 34 sont placés sur un même banc optique 40 permettant d'effectuer les réglages des distances entre ces différents appareils et la distance séparant l'objectif 26 du rotor 10 à visualiser.

Sur ce banc 40, les seuls réglages à effectuer concernent la distance séparant le rotor 10 de l'objectif 26, qui détermine la netteté de l'image, et les distances séparant l'objectif 32 respectivement de l'objectif 26 et de la surface sensible de la caméra 34, qui déterminent le grossissement obtenu à l'aide de l'objectif 32. Le premier de ces réglages est effectué sur le banc de mesure alors que le second réglage est effectué en laboratoire. Il est à noter que la distance séparant l'objectif 26 du plan 28 dans lequel est placé le réticule gradué 30 est fixée une fois pour toute pour que l'image au niveau du réticule soit à l'échelle 1.

Bien entendu, l'invention n'est pas limitée au mode de réalisation qui vient d'être décrit à titre d'exemple, mais en couvre toutes les variantes. En particulier, les images du rotor et du réticule grossies par l'objectif 32 peuvent être observées par des moyens différents de la caméra vidéo 34, de l'écran 36 et de l'enregistreur 38. Ainsi, selon l'exploitation qui doit être faite de ces images, celles-ci peuvent être formées directement sur un écran placé derrière l'objectif 32, ou encore recueillies par un appareil photographique ou par une caméra cinématographique.

Par ailleurs, il va de soi qu'on peut adjoindre à l'installation décrite des moyens permettant de visualiser sur un écran tel que l'écran 36 ou d'enregistrer à tout instant la valeur de la vitesse de rotation du rotor 10 détectée par le capteur 18.

Enfin, l'installation selon l'invention peut être utilisée pour mesurer les déformations d'un objet quelconque soumis à des contraintes. Si ces contraintes ne sont pas induites par un mouvement rapide de l'objet comme dans l'application décrite, le stroboscope et les moyens de synchronisation qui lui sont associés peuvent donc être supprimés. En outre, l'utilisation d'une enceinte sous vide n'est justifiée que lorsque l'objet est soumis à un mouvement rapide risquant d'entraîner son échauffement.

## Revendications

1. Installation pour mesurer les déformations d'un objet (10) soumis à des contraintes, comprenant:
- un premier objectif (26) formant une image réelle de l'objet, à l'échelle 1 ;
- un réticule gradué (30) placé à l'emplacement de ladite image réelle ;
- un deuxième objectif (32) placé au-delà de l'image réelle par rapport au premier objectif, et formant des images grossies de l'image réelle et du réticule ; et
- des moyens d'observation (34) desdites images grossies permettant, par comparaison des images grossies du réticule et de l'image réelle, de mesurer des déformations de cette dernière et, par conséquent, de l'objet.

2. Installation selon la revendication 1, appliquée à la mesure des déformations d'un objet (10) tournant à grande vitesse, caractérisée par le fait qu'elle comprend de plus :
- une enceinte sous vide (14) apte à recevoir ledit objet ;
- un stroboscope (16) délivrant des impulsions lumineuses dirigées sur l'objet (10) ;
- des moyens (18,20,22) pour synchroniser la fréquence desdites impulsions lumineuses sur la vitesse de l'objet ;
le premier objectif (26) étant placé hors de l'enceinte, devant un hublot (24) de cette dernière, de façon à former l'image réelle de l'objet à l'extérieur de l'enceinte.

3. Installation selon la revendication 2, caractérisée par le fait qu'elle comprend de plus un moyen (23) de déphasage des impulsions lumineuses délivrées par le stroboscope (16).

4. Installation selon l'une quelconque des revendications 2 et 3, caractérisée par le fait que lesdits moyens (18,20,22) pour synchroniser la fréquence des impulsions lumineuses sur la vitesse de rotation de l'objet, sont réglés afin que le stroboscope délivre 60 impulsions par tour de l'objet.

5. Installation selon l'une quelconque des revendications 1 à 4, caractérisée par le fait que le premier objectif (26) a une focale comprise entre environ 300 mm et environ 400 mm.

6. Installation selon l'une quelconque des revendications 1 à 5, caractérisée par le fait que le deuxième objectif (32) a une focale comprise entre environ 25 mm et environ 38 mm.

7. Installation selon l'une quelconque des revendications 1 à 6, caractérisée par le fait que le grossissement des images grossies par rapport à l'image réelle et au réticule est compris entre environ 100 fois et environ 300 fois.

8. Installation selon l'une quelconque des revendications 1 à 7, caractérisée par le fait que lesdits moyens d'observation comprennent une caméra vidéo (34) connectée à un enregistreur vidéo (38) relié à un écran vidéo (36).

## Claims

1. Installation for measuring the deformation of an object (10) subject to stresses comprising a first lens (26) forming a real image of the object at scale 1, a graduated reticule (30) placed at the location of said real image, a second lens (32) placed beyond the real image with respect to the first lens and forming enlarged images of the real image and the reticule and means (34) for observing said enlarged images making it possible, by comparing the enlarged images of the reticule and the real image, to measure deformations of the latter and consequently the object.

2. Installation according to claim 1 applied to the measurement of deformations of an object (10) rotating at high speed, characterized in that it also comprises a vacuum enclosure (14) able to receive said object, a stroboscope (16) supplying light pulses directed onto the object (10) and means (18, 20, 22) for synchronizing the frequency of said light pulses onto the speed of the object, the first lens (26) being placed outside the enclosure, in front of a shielding window (24) of the latter, so as to form the real image of the object outside the enclosure.

3. Installation according to claim 2, characterized in that it also comprises a means (23) for the phased displacement of the light pulses supplied by the stroboscope (16).

4. Installation according to either of the claims 2 and 3, characterized in that the said means (18, 20, 22) for synchronizing the frequency of the light pulses to the rotation speed of the object are regulated in such a way that the stroboscope supplies 60 pulses for every revolution of the object.

5. Installation according to any one of the claims 1 to 4, characterized in that the first lens (26) has a focal length between approximately 300 mm and approximately 400 mm.

6. Installation according to any one of the claims 1 to 5, characterized in that the second lens (32) has a focal length between approximately 25 mm and approximately 38 mm.

7. Installation according to any one of the claims 1 to 6, characterized in that the magnification of the images magnified compared with the real image and the reticule is between approximately 100x and approximately 300x.

8. Installation according to any one of the claims 1 to 7, characterized in that said observation means comprise a video camera (34) connected to a video recorder (38) connected to a video screen (36).

## Patentansprüche

1. Vorrichtung zur Messung der Deformationen eines Spannungen ausgesetzten Objekts, die enthält:
- ein erstes Objektiv (26), das eine reelle Abbildung eines Objekts im Maßstab 1 bildet;
- ein Skalenstrichkreuz (30), angeordnet am Ort der reellen Abbildung;
- ein zweites Objektiv (32), angeordnet jenseits der reellen Abbildung, bezogen auf das erste Objektiv, dabei vergrößerte Bilder der reellen Abbildung und des Strichkreuzes bildend; und
- Beobachtungseinrichtungen (34) der genannten vergrößerten
Bilder, welche ermöglichen, durch das Vergleichen der vergrößerten Bilder des Strichkreuzes mit der reellen Abbildung, die Deformationen dieser letzteren und folglich des Objekts zu messen.

2. Vorrichtung nach Anspruch 1, angewandt für die Messung der Deformation eines Objekts (10), das mit großer Geschwindigkeit dreht, dadurch gekennzeichnet, daß sie außerdem umfaßt:
- einen umschlossenen Raum unter Vakuum (14), geeignet für die Aufnahme dieses Objekts;
- ein Stroboskop (16), das Lichtimpulse liefert, die auf das Objekt (10) gerichtet sind;
- Einrichtungen (18, 20, 22), um die Frequenz der genannten Lichtimpulse mit der Geschwindigkeit des Objekts zu synchronisieren;
wobei das erste Objektiv (26) außerhalb des umschlossenen Raums angeordnet ist, vor einem Fenster (24) dieses letzteren, um die reelle Abbildung des Objekts außerhalb des umschlossenen Raums zu bilden.

3. Vorrichtung nach Anspruch 2, dadurch gekennzeichnet, daß sie außerdem eine Phasenverschiebungseinrichtung (23) der durch das Stroboskop (16) gelieferten Lichtimpulse umfaßt.

4. Vorrichtung nach einem der Ansprüche 2 und 3, dadurch gekennzeichnet, daß die genannten Einrichtungen (18,20,22) für das Synchronisieren der Frequenz der Lichtimpulse mit der Rotationsgeschwindigkeit des Objekts so geregelt werden, daß das Stroboskop 60 Impulse pro Umdrehung des Objekts liefert.

5. Vorrichtung nach einem der Ansprüche 1 bis 4, dadurch gekennzeichnet, daß das erste Objektiv (26) eine Brennweite aufweist, die enthalten ist zwischen ungefähr 300 mm und ungefähr 400 mm.

6. Vorrichtung nach einem der Ansprüche 1 bis 5, dadurch gekennzeichnet, daß das zweite Objektiv (32) eine Brennweite aufweist, die enthalten ist zwischen ungefähr 25 mm und ungefähr 38 mm.

7. Vorrichtung nach einem der Ansprüche 1 bis 6, dadurch gekennzeichnet, daß die Vergrößerung der vergrößerten Bilder bezüglich der reellen Abbildung und des Strichkreuzes enthalten ist zwischen ungefähr 100 fach und ungefähr 300 fach.

8. Vorrichtung nach einem der Ansprüche 1 bis 7, dadurch gekennzeichnet, daß die genannten Beobachtungsmittel eine Video-Kamera (34) umfassen, angeschlossen an ein Video-Aufzeichnungsgerät (38), das mit einem Video-Bildschirm (36) verbunden ist.
